# EUROPÄISCHE PATENTSCHRIFT

(11) **EP 2 028 214 B1**
(45) Veröffentlichungstag und Bekanntmachung des Hinweises auf die Patenterteilung: **22.09.2010**
(21) Anmeldenummer: 08160488.6
(22) Anmeldetag: 16.07.2008
(51) Int. Cl.: C08G 77/46

(54) **Über SiC- und über Carbonsäureestergruppen verknüpfte lineare Polydimethylsiloxan-Polyoxyalkylen-Blockcopolymere, ein Verfahren zu ihrer Herstellung und ihre Verwendung**
Linear polydimethylsiloxane-polyoxyalkyl-block copolymers, a method for their manufacture and application
Polydimethylsiloxane-polyoxyalkylène-copolymères en bloc linéaires reliés par des groupes d'esters d'acide carbonique et de SiC, leur procédé de fabrication et leur utilisation

(30) Priorität: 27.07.2007 DE 102007035646
(43) Veröffentlichungstag der Anmeldung: 25.02.2009
(73) Patentinhaber: Evonik Goldschmidt GmbH, 45127 Essen (DE)
(72) Erfinder: Knott, Wilfried, Dr., 45355 Essen (DE); Thum, Oliver, Dr., 40880 Ratingen (DE); Klein, Klaus-Dieter, Dr., 45481 Mülheim an der Ruhr (DE); Windbiel, Dagmar, 45289 Essen (DE); Hierath, Claudia, 45257 Essen (DE)

(56) Entgegenhaltungen:
- US-A1- 2004 186 260

## Beschreibung

Die Erfindung betrifft sowohl über SiC- als auch über Carbonsäureestergruppen verknüpfte lineare Polydimethylsiloxan-Polyoxyalkylen-Blockcopolymere mit sich wiederholenden (AB)-Einheiten, ein Verfahren zu ihrer Herstellung und ihre Verwendung als Stabilisatoren in Polyurethanweichschäumen.

Bei der Herstellung von Polyurethanweichschäumen werden dem Gemisch der Rohstoffe Polysiloxan-Polyoxyalkylen-Blockcopolymerisate zugesetzt, welche vielfältige Aufgaben haben und u. a. die Ausbildung eines gleichmäßigen Porengefüges ermöglichen und den gebildeten Schaum bis zur Beendigung der Reaktion stabilisieren.

Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen, sowohl für den Polyoxyalkylenblock als auch für den Polysiloxanblock.

Der Polyoxyalkylenblock kann aus verschiedenen Oxyalkyleneinheiten, vornehmlich aus Oxyethylen-, Oxypropylen- und Oxybutyleneinheiten, zusammengesetzt sein. Dabei können das Gewichtsverhältnis dieser Einheiten zueinander, ihre Sequenz sowie das Molgewicht des Polyoxyalkylenblockes variiert werden.

Von Bedeutung ist auch die Endgruppe des Polyoxyalkylenblockes, die in Bezug auf die Polyurethanbildung reaktiv (z. B. OH-Gruppe) oder inert (z. B. Alkoxy-Gruppe) sein kann. Der Polyoxyalkylenblock kann mit dem Polysiloxanblock durch eine hydrolytisch stabile Si-C-Bindung oder die hydrolytisch weniger stabile SiO-C-Bindung verknüpft sein. Dabei können auch unterschiedliche Polyoxyalkylenblöcke an den Polysiloxanblock gebunden sein.

Der Polysiloxanblock kann in Bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockcopolymerisates als Schaumstabilisator können nur in begrenztem Maße gemacht werden, da, je nach technischer Verwendung der Schäume, die Formulierungen stark variieren. Der Fachmann ist deshalb genötigt, die Variationsmöglichkeiten weitgehend empirisch zu erproben. In Anbetracht der großen, nahezu unübersehbaren Anzahl der Variationsmöglichkeiten stellt die Auffindung im Sinne der Polyurethanherstellung besonders wirksamer spezieller Strukturparameter und entsprechender Blockmischpolymerisate eine fortschrittsraffende Aufgabe und deren Lösung somit eine erfinderische Leistung dar.

Polysiloxan-Polyoxyalkylen-Blockcopolymerisate, die im durchschnittlichen Molekül unterschiedliche Polyoxyalkylenreste aufweisen und die entweder SiO-C- oder Si-C-gebunden vorliegen, sind bereits wiederholt beschrieben worden. Aus der großen Anzahl entsprechender Veröffentlichungen sollen stellvertretend die folgenden Schriften genannt werden: US-3,920,587; US-3,947,386; US-6,187,891; DE-A-23 40 595; DE-C-22 10 934.

Die SiO-C-basierenden Produkte sind, wie allgemein bekannt, nicht hydrolysestabil.

Die hydrolysestabilen Si-C-basierenden Produkte werden heute überwiegend durch Hydrosilylierung von Allylpolyethern an SiH-Gruppen aufweisende Polysiloxane hergestellt. Eine unerwünschte Nebenreaktion bei der Hydrosilylierung von Allylpolyethern ist deren Umlagerung zu den thermodynamisch begünstigten, jedoch nicht mehr anlagerungsfähigen Propenylpolyethern. Daher muss die Allylkomponente üblicherweise im Überschuss von ca. 20 bis 30 Gew.-% eingesetzt werden. Die durch Säurespuren und Feuchtigkeit ausgelöste Hydrolyse des im Endprodukt enthaltenen Propenylpolyethers führt zur Entstehung von Propionaldehyd und dessen Oligomeren (Aldoxane, Trioxane), die zeitverzögert aus dem Siliconpolyether austreten und somit für dessen Geruchsbehaftung verantwortlich sind. Der hydrolyseinstabile Propenylpolyether fungiert dabei als eine Art von Reservoir, aus dem kontinuierlich Geruchsträger nachgebildet werden.

Produkte, bei denen geruchliche Neutralität gefordert ist, bedürfen daher einer aufwändigen Nachbehandlung (vergl. JP-A-07304627; DE-A-41 16 419; EP-A-0 398 684) ohne das Problem dauerhaft und zufriedenstellend lösen zu können.

Besonders empfindliche Indikatoren für Abweichungen vom Qualitätsniveau sind z.B. diejenigen Polyethersiloxane, die als Schaumstabilisatoren Eingang nehmen in die Herstellung von PU-Weichschäumen. Als anwendungstechnische Parameter sind die Aktivität und die Zellfeinheit Kriterien zur Beurteilung der Produktqualität. Produktabweichungen bilden sich daher zwingend in der Anwendungstechnik ab.

Werden α,ω-Diallyl-modifizierte Polyether mit α.ω-Dihydrogenpolydimethylsiloxanen unter SiC-Verknüpfung umgesetzt, so führt der zur Erzielung quantitativen SiH-Umsatzes notwendige Diallyl-Polyetherüberschuss von ca. 20 bis 40 Mol-% zu einem sehr kurzen Polyethersiloxan-Copolymer. Das erzielbare Molekulargewicht hängt dann entscheidend von dem Molekulargewicht der einzelnen Edukte ab.

Die im Stand der Technik beschriebenen Verfahren eignen sich daher nicht, um zu Polymerisaten mit höheren Polymerisationsgraden zu gelangen. Mit den Verfahren gemäß dem Stand der Technik hergestellte Copolymere weisen im Mittel nur drei Siloxanblöcke auf.

Für verschiedene Applikationen ist es jedoch von Vorteil höhermolekulare Polysiloxan-Polyoxyalkylen-Blockcopolymerisate einzusetzen. So sind z. B. niedermolekulare Block-Polyethersiloxan-Copolymere als PU-Schaumstabilisatoren, insbesondere für PU-Weichschäume, insbesondere PU-Etherschäume nicht geeignet.

Ein weiterer Nachteil der beschriebenen Verfahren besteht darin, dass sie intolerant sind gegenüber auch nur geringfügigen Änderungen der Verfahrensparameter, d.h. solchen, die normalerweise in technischen Verfahren unvermeidbar sind, so dass eine spezifikationsgerechte Reproduzierung der unterschiedlichen Chargen in der Regel nicht gewährleistet ist. Verluste durch Fehlchargen müssen daher zwingend einkalkuliert werden.

Aufgabe der vorliegenden Erfindung war die Bereitstellung von Polysiloxan-Polyoxyalkylen-Blockcopolymerisate, die als PU-Schaumstabilisatoren geeignet sind und welche einen oder mehrere der Nachteile der Polysiloxan-Polyoxyalkylen-Blockcopolymerisate des Standes der Technik nicht aufweisen.

Überraschenderweise wurde nun gefunden, dass sich spezielle (wie in Anspruch 1 definierte) sowohl über SiC- als auch über Carbonsäureestergruppen verknüpfte lineare Polydimethylsiloxan-Polyoxyalkylen-Blockcopolymere in vorzüglicher Weise zur Stabilisierung von Polyurethanschäumen und hierbei insbesondere zur Stabilisierung von PU-Weichschäumen (PU-Etherschäumen) eignen.

Über Carbonsäureestergruppen verknüpfte Siliconpolyether-Copolymere sind an sich bekannte Verbindungen, die nach verschiedenen Verfahren gewonnen werden können.

So beschreiben die Patentanmeldungen JP-A-08-157601 und US-A-2003-0096919 zwar den Einsatz terminal ungesättigter Ester, machen jedoch keine Angaben über die Herstellung und ggf. Aufreinigung dieser Verbindungen. Unter Berücksichtigung, dass die Platinmetall-katalysierte Hydrosilylierung eine gegenüber Katalysatorgiften sehr empfindliche Reaktion ist, sind teilweise umfangreiche Reinigungsschritte nötig, um brauchbare Ester zu erhalten, die problemlos weiter mit Siloxanen umgesetzt werden können.

Einen deutlich verbesserten Zugang zu den als Intermediat eingesetzen ungesättigten Carbonsäureestern erschließt die biokatalytisch geführte Synthese. Der Einsatz von immobilisierten, d.h. geträgerten, Enzymen bzw. Enzymkomplexen in der Veresterungsreaktion führt zu Zwischenprodukten, die frei von störenden Verunreinigungen und insbesondere die spätere Platinmetall-Katalyse inhibierenden Katalysatorgiften sind.

Beispielsweise können gemäß Lehre der noch nicht veröffentlichten Anmeldung DE-10 2006 005 100.9 α,ω-dihydroxy-funktionelle Polyether durch Veresterung mit ungesättigten Carbonsäuren in der ersten Stufe und anschließender hydrosilylierender SiC-Verknüpfung mit α.ω-Dihydrogenpolydimethylsiloxanen in der zweiten Stufe, zu hochmolekularen Carbonsäurester-verbrückten Polydimethylsiloxan-Polyether-Blockcopolymeren umgesetzt werden. Diese Verfahrensweise wird auch zur Herstellung der erfindungsgemäßen Produkte bevorzugt. Die DE-10 2006 005 100.9 wird daher als Referenz eingeführt und gilt als Teil der Offenbarung der vorliegenden Erfindung.

Trotz ihrer grundsätzlich positiven Eigenschaften sind diese Carbonsäurester-verbrückten linearen Polydimethylsiloxan-Polyether-Blockcopolymeren jedoch nicht insgesamt als Stabilisatoren für Polyurethanweichschaumstoffe und insbesondere nicht als Stabilisatoren für elastische Polyurethanweichschaumstoffe, geeignet.

Überraschenderweise wurde nun gefunden, dass lineare Si-C-Gruppen und Carbonsäureestergruppen aufweisende Polydimethylsiloxan-Polyoxyalkylen-Blockcopolymere mit sich wiederholenden (A¹BA²B) -Einheiten,
mit A¹ und A² gleich zwei verschiedene Polydimethylsiloxaneinheiten der allgemeinen Formel (I) 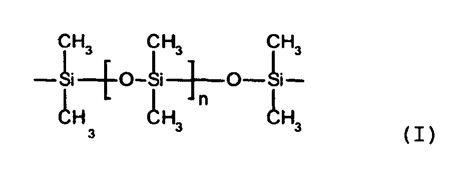 mit einer Anzahl an Si-Atomen N = (n + 2) von 15 < N < 30 und N_{A1} ≠ N_{A2}
und B: gleich eine Einheit der Formel (II)

-CH₂-CH₂-(CH₂)ₐ-CO[O-CH₂-CH(R)]_{c}-O-[D-O]ₑ-[-CH(R)-CH₂-O]_{d}-OC-(CH₂)_{b}-CH₂-CH₂- (II)

mit
R unabhängig voneinander: H, -CH₃, -C₂H₅,
a und b unabhängig voneinander 0 bis 20,
c und d unabhängig voneinander Werte ≥ 1,
e 0 oder 1 und
D ein Kohlenwasserstoffrest mit 2 bis 10 C-Atomen,
wobei das Gesamtmolgewicht der Einheit der Formel II von 600 bis 10.000 g/mol beträgt, mit der Maßgabe, dass das mittlere Mischmolgewicht der Polydimethylsiloxaneinheiten (A¹+A²) von > 1.665 bis < 1.998 g/mol bzw. die mittlere Kettenlänge N der Einheiten A von > 22,5 bis < 27, vorzugsweise von 23 < N < 26 beträgt und der Anteil an [O-CH₂-CH(R)] mit R = H > 0 und ≤ 50 Gew.-% bezogen auf das Gesamtgewicht [O-CH₂-CH(R)] in B beträgt,
excellente Stabilisatoren für Polyurethanweichschaumstoffe darstellen.

Gegenstand der Erfindung sind daher lineare, sowohl über Si-C-als auch über Carbonsäureestergruppen verknüpfte Polydimethylsiloxan-Polyoxyalkylen-Blockcopolymere mit sich wiederholenden (A¹BA²B)-Einheiten gemäß Anspruch 1.

Ebenfalls Gegenstand der vorliegenden Erfindung ist ein Verfahren gemäß Anspruch 6 zur Herstellung von über Si-C- als auch über Carbonsäureestergruppen verknüpfte Polydimethylsiloxan-Polyoxyalkylen-Blockcopolymere mit sich wiederholenden (A¹BA²B)-Einheiten.

Außerdem ist Gegenstand der vorliegenden Erfindung die Verwendung der erfindungsgemäßen Polydimethylsiloxan-Polyoxyalkylen-Blockcopolymere mit sich wiederholenden (A¹BA²B)-Einheiten als Additive zur Herstellung von Polyurethan-Etherschäumen.

Weitere nicht explizit genannte Gegenstände ergeben sich aus dem Kontext der nachfolgenden Beschreibung, den Beispielen sowie den Ansprüchen.

Die erfindungsgemäßen Block-Polyethersiloxan-Copolymere haben den Vorteil, dass sie sich hervorragend zur Stabilisierung von PU-Weichschäumen, insbesondere von PU-Etherschäumen eignen.

Das erfindungsgemäße Verfahren zur Herstellung von Block-Polyethersiloxan-Copolymere hat den Vorteil, dass ein ökonomisch und ökologisch vorteilhaftes Verfahren bereitsteht, welches es ermöglicht, hochmolekulare, lineare und hydrolysestabile SiC-verknüpfte Block-Polyethersiloxan-Copolymere mit verbesserten Stabilisatoreigenschaften in PU-Weichschaumstoffen verlässlich reproduzierbar herzustellen.

Die erfindungsgemäßen linearen, sowohl über Si-C- als auch über Carbonsäureestergruppen verknüpfte Polydimethylsiloxan-Polyoxyalkylen-Blockcopolymere mit sich wiederholenden (A¹BA²B)-Einheiten, ein Verfahren zu deren Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäßen linearen Si-C-Gruppen und Carbonsäureestergruppen aufweisenden Polydimethylsiloxan-Polyoxyalkylen-Blockcopolymere zeichnen sich dadurch aus, dass sie sich wiederholende (A¹BA²B)-Einheiten aufweisen,
mit A¹ und A² gleich zwei verschiedene Polydimethylsiloxaneinheiten der allgemeinen Formel (I) 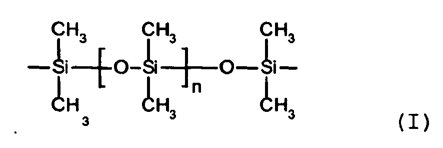 mit einer mittleren Anzahl an Si-Atomen N = (n + 2) von 15 < N ≤ 30 und N_{A1} ≠ N_{A2} (Anzahl der Si-Atome in den Einheiten A¹ und A² ungleich)
und B: gleich eine Einheit der Formel (II)

-CH₂-CH₂-(CH₂)ₐ-CO[O-CH₂-CH(R)]_{c}-O-D-O]ₑ-[-CH(R)-CH₂-O]_{d}-OC-(CH₂)_{b}-CH₂-CH₂- (II)

mit
R unabhängig voneinander: H, -CH₃, -C₂H₅,
a und b unabhängig voneinander 0 bis 20, vorzugsweise 6 bis 8,
c und d unabhängig voneinander Werte ≥ 1, vorzugsweise ≥ 1 und ≤ 120, bevorzugt von 5 bis 50 und besonders bevorzugt von 20 bis 35,
e = 0 oder 1 und
D ein Kohlenwasserstoffrest, der linear oder verzweigt sein kann, mit 2 bis 10 C-Atomen,
wobei das Gesamtmolgewicht der Einheit der Formel II (also das mittlere Molekulargewicht des Polyoxyalkylenblocks) von 600 bis 10.000 g/mol, vorzugsweise 2.000 bis 5.000 g/mol, insbesondere 2.500 bis 3.500 g/mol beträgt,
mit der Maßgabe, dass das mittlere Mischmolgewicht der Polydimethylsiloxaneinheiten (A¹+A²) von > 1.665 bis < 1.998 g/mol bzw. die mittlere Kettenlänge N der Einheiten A von > 22,5 bis < 27, vorzugsweise von 23 < N < 26 beträgt und der Anteil an [O-CH₂-CH(R)] mit R = H in B von > 0 bis ≤ 50 Gew.-%, vorzugsweise 30 bis ≤ 50 Gew.-% bezogen auf das Gesamtgewicht [O-CH₂-CH(R)] in B beträgt.

Die technischen Produkte der oben angegebenen Formeln (I) oder (II) können produktionsbedingt einen gewissen Verteilungsgrad der Molmassen aufweisen. Die Indices in den Formeln und N sind daher als Mittelwerte zu betrachten.

Das mittlere Mischmolgewicht der Siloxan-Einheiten errechnet sich aus den jeweiligen Massenanteilen der Einheiten A¹ und A².

A¹, A² und B repräsentieren in der Formel (A¹BA²B) die Molekülfragmente, die sich nach der Hydrosilylierungsreaktion im unten beschriebenen Verfahren aus den Verbindungen A^{1'} und A^{2'} und B' ergeben.

Die erfindungsgemäßen Polydimethylsiloxan-Polyoxyalkylen-Blockcopolymere können mehr als zwei Einheiten A aufweisen. So kann z. B. die Einheit A² eine Mischung von Einheiten A^{2a} und A^{2b} sein, weiterhin die oben genannten Bedingungen erfüllt sein müssen und das mittlere Mischmolgewicht aller Polydimethylsiloxaneinheiten A im Bereich von > 1.665 bis < 1.998 g/mol liegen muss. Erfindungsgemäß bevorzugte Polydimethylsiloxan-Polyoxyalkylen-Blockcopolymere enthalten lediglich zwei unterschiedliche Siloxaneinheiten A¹ und A².

Die Siloxanblöcke A¹ und A² werden aus technischen Produkten erhalten und repräsentieren lineare Siloxanpolymereinheiten mit sich wiederholenden Siloxanbausteinen, die durch die Summenformeln (-R₂SiO-)ₙ¹ und (-R₂SiO-)ₙ² dargestellt werden können, wobei n¹ ≠ n² ist. Die Größe der einzelnen verschiedenen Siloxanblöcke kann jeweils innerhalb der angegebenen Grenzen beliebig variieren wobei wegen der Bedingung N¹≠ N² auch A¹ ≠ A² ist.

Bevorzugt enthalten erfindungsgemäße Polydimethylsiloxan-Polyoxyalkylen-Blockcopolymere als Einheiten A ausschließlich Einheiten A¹ mit N_{A}¹ ≤ 20, vorzugsweise 15 bis 19, bevorzugt 15 und A² mit N_{A}² ≥ 25, vorzugsweise 26 bis 30, bevorzugt 30.

Die Größe der einzelnen Oxyalkyleneinheiten (Formel II) kann gleich oder unterschiedlich sein. Vorzugsweise ist die Größe der Oxyalkyleneinheiten der Formel (II) innerhalb der oben genannten Grenzen unterschiedlich.

Die einzelnen Polyoxyalkyleneinheiten der Formel II können aus dem Additionsprodukt aus mindestens einem Oxyalkylenmonomer, ausgesucht aus der Gruppe Ethylenoxid, Propylenoxid und Butylenoxid, vorzugsweise Mischprodukte aus mindestens zwei Monomereinheiten, insbesondere aus Ethylenoxid und Propylenoxid, gebildet werden. Bevorzugt enthalten Polyoxyalkyleneinheiten der Formel II Oxyethylen- und Oxypropyleneinheiten mit einem Oxyethylenanteil von etwa 30 bis < 50 Gew.-% und > 50 bis 70 Gew.-% Oxypropylenanteil, bezogen auf den Gesamtgehalt an Oxyalkyleneinheiten in der Polyoxyalkyleneinheit der Formel II.

Der gesamte Anteil an Siloxaneinheiten A, also insbesondere (A¹ + A²) beträgt im erfindungsgemäßen Polydimethylsiloxan-Polyoxyalkylen-Blockcopolymer vorzugsweise von 20 bis 50 Gew.-%, bevorzugt von 35 bis 40 Gew.-%. Der Anteil der Polyoxyalkylenblöcke B beträgt vorzugsweise entsprechend von 50 bis 80 Gew.-%, bevorzugt von 60 bis 65 Gew.-%.

Das erfindungsgemäße Polydimethylsiloxan-Polyoxyalkylen-Blockcopolymer weist vorzugsweise ein mittleres zahlengemitteltes Molekulargewicht Mₙ von mindestens 10.000 g/mol bis ca. 100.000 g/mol, bevorzugt von 15.000 g/mol bis ca. 40.000 g/mol auf. Die Ermittlung der mittleren Molmassen kann mittels der bekannten Methoden der GPC-Analytik erfolgen.

Die erfindungsgemäßen Polydimethylsiloxan-Polyoxyalkylen-Blockcopolymere sind insbesondere durch das nachfolgend beschriebene erfindungsgemäße Verfahren erhältlich bzw. können durch dieses erhalten werden.

Das erfindungsgemäße Verfahren zur Herstellung von SiC-verknüpften, linearen Polydimethylsiloxan-Polyoxyalkylen-Blockcopolymeren mit sich wiederholenden (A¹BA²B)-Einheiten zeichnet sich dadurch aus, dass mindestens zwei unterschiedliche lineare α,ω-Dihydrogen-polydimethylsiloxane (A') mit mindestens einem ungesättigten, Estergruppen enthaltenden Polyetherdiol (B') in Gegenwart einer oder mehrerer Edelmetallverbindungen als Katalysator umgesetzt werden, mit
A': mindestens zwei verschiedenen α,ω-Dihydrogen-Polydimethylsiloxanverbindungen (A^{1'} und A^{2'}) der allgemeinen Formel (I') 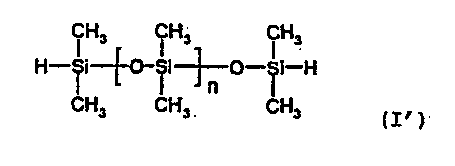 mit einer Anzahl an Si-Atomen N = (n + 2)von 15 < N < 30 und N_{A1} ≠ N_{A2}
B': eine Verbindung der Formel (II')

   CH₂=CH-(CH₂)ₐ-CO[O-CH₂-CH(R)]_{c}-O-[D-O]ₑ-[-CH(R)-CH₂-O]_{d}-OC-(CH₂)_{b}-CH=CH₂ (II')

   mit
   R unabhängig voneinander: H, -CH₃ oder -C₂H₅, vorzugsweise H oder -CH₃,
   a und b unabhängig voneinander 0 bis 20, vorzugsweise 6 bis 8,
   c und d unabhängig voneinander Werte ≥ 1, vorzugsweise ≥ 1 und ≤ 120, bevorzugt von 5 bis 50 und besonders bevorzugt von 20 bis 35,
   e 0 oder 1 und
   D ein gegebenenfalls verzweigter Kohlenwasserstoffrest mit 2 bis 10 C-Atomen,
wobei das Gesamtmolgewicht des eingesetzten Polyethers B' von 600 bis 10.000 g/mol, vorzugsweise 2.000 bis 5.000 g/mol, insbesondere 2.500 bis 3.500 g/ mol beträgt,
mit den Maßgaben, dass das mittlere Mischmolgewicht der eingesetzten Polydimethylsiloxanverbindungen (A^{1'}+A^{2'}) im Bereich von > 1.665 bis < 1.998 g/mol bzw. die mittlere Kettenlänge N der Verbindungen A' von > 22,5 bis < 27, vorzugsweise 23 < N < 26 beträgt und der Anteil an [O-CH₂-CH(R)] mit R = H von > 0 bis ≤ 50 Gew.-%, vorzugsweise von 30 % bis ≤ 50 % bezogen auf Gesamtpolyethergewicht [O-CH₂-CH(R)] in B' beträgt. Das Zahlenmittel des jeweiligen Molgewichts kann mittels des bekannten Verfahrens der Gelpermeationschromatographie (GPC) bestimmt werden.

In dem erfindungsgemäßen Verfahren können mehr als zwei Verbindungen A' eingesetzt werden. So kann z. B. die eingesetzte Komponente A^{2'} z. B. eine Mischung der Komponenten A^{2'a} und A^{2'b} sein, wobei weiterhin die oben angegebenen Bedingungen erfüllt sein müssen und das mittlere Mischmolgewicht aller Polydimethylsiloxanverbindungen im Bereich > 1.665 bis < 1.998 g/mol liegen muss bzw. bzw. die mittlere Kettenlänge N aller Verbindungen A' von > 22,5 bis < 27, vorzugsweise 23 < N < 26 betragen muss.

Bevorzugt werden in dem erfindungsgemäßen Verfahren jedoch nur zwei unterschiedliche Siloxankomponenten A^{1'} und A^{2'} eingesetzt. Besonders bevorzugt werden in dem erfindungsgemäßen Verfahren als Komponenten A^{1'} und A^{2'} ausschließlich solche Siloxanverbindungen A^{1'} mit N_{A}^{1'} ≤ 20, vorzugsweise 15 bis 19, bevorzugt 15 und A^{2'} mit N_{A}^{2'} ≥ 25, vorzugsweise 26 bis 30, bevorzugt 30 eingesetzt.

Als Polyoxyalkylenverbindungen (B') werden vorzugsweise solche eingesetzt, deren Polyoxyalkylenblöcke durch Anlagerung von sich wiederholenden Oxyalkyleneinheiten [O-CH₂-CH(R)] an ein Starterdiol der allgemeinen Formel HO-[D-O]ₑ-H, worin D ein gegebenenfalls verzweigter Kohlenwasserstoffrest mit 2 bis 10 C-Atomen und e 0 oder 1 ist, erhältlich sind. Auf diese Weise sind Diolkomponenten der allgemeinen Formel

H[O-CH₂-CH(R)]_{c}-O-[D-O]ₑ-[-CH(R)-CH₂-O]_{d}-H

erhältlich, aus denen die Komponente B' hergestellt werden kann. Vorzugsweise sind die Polyoxyalkylenblöcke Additionsprodukte aus mindestens einem Oxyalkylenmonomer, ausgesucht aus der Gruppe Ethylenoxid, Propylenoxid und Butylenoxid, vorzugsweise Mischprodukte aus mindestens zwei Monomereinheiten, insbesondere aus Ethylenoxid und Propylenoxid.

Die eingesetzten Verbindungen B' können vorzugsweise wie in DE-10 2006 005 100.9 beschrieben, durch Kondensation der entsprechenden Alkohole und Säuren unter Verwendung mindestens eines Enzyms als Katalysator hergestellt werden. Statt der Säuren können auch die entsprechenden Ester der Carbonsäuren mit leichtflüchtigen Alkoholen zu einer Umesterung eingesetzt werden, beispielsweise eignen sich Methyl-, Ethyl- oder Vinylester.

Bei den als Katalysatoren verwendbaren Enzymen handelt es sich vorzugsweise um solche aus der Gruppe der hydrolytischen Enzyme, z. B. Lipasen, Esterasen oder Proteasen, wie beispielsweise Cholesterol Esterase, Esterase aus Schweineleber oder Lipasen aus *Candida rugosa, Pseudomonas sp., Thermomyces langosiosus,* Schweinepankreas, *Mucor miehei, Alcaligines sp.,* vorzugsweise Lipasen, besonders bevorzugt Lipase B aus *Candida antarctica*. Bevorzugt wird als Katalysator das Enzym Lipase B aus Candida antarctica eingesetzt, welches unter der Produktbezeichnung Novozym^{®} 435 von Novozymes Deutschland GmbH zu beziehen ist.

Als Katalysatoren können ganze Zellen, ruhende Zellen, immobilisierte Zellen, gereinigte Enzyme oder Zellextrakte, die die entsprechenden Enzyme enthalten oder Mischungen davon eingesetzt werden. Die Enzyme können erfindungsgemäß in Ganzzellsystemen, in freier Form oder auf geeignete Träger immobilisiert verwendet werden.

Die Katalysatoren werden vorzugsweise in Mengen von ca. 0,1 bis ca. 10,0 Gew.-%, vorzugsweise 1,0 bis 5,0 Gew.-%, bezogen auf die zur Umesterung bzw. Veresterung bestimmte Reaktionsmischung eingesetzt. Das molare Verhältnis von Alkoholen zu Säuren liegt vorzugsweise im Äquivalenzbereich.

Die zur Veresterung der Diolkomponente der allgemeinen Formel H[O-CH₂-CH(R)]_{c}-O-[D-O]ₑ-[-CH(R)-CH₂-O]_{d}-H verwendeten ungesättigten Säuren können eine oder mehrere Verbindungen der allgemeinen Formel CH₂=CH-(CH₂)ₐ-COOR, mit R = H oder ein C₁₋₅-Alkylrest und a wie oben angegeben, sein, bevorzugt ausgesucht aus der Gruppe umfassend Acrylsäure, 1-Butensäure, 1-Pentensäure, 1-Hexensäure, 1-Heptensäure, 1-Octensäure, 1-Nonensäure, 1-Decensäure und Undecylensäure sein. Bevorzugt wird als ungesättigte Säure Undecylensäure allein oder deren Mischungen mit Acrylsäure eingesetzt.

Zur Herstellung der Verbindung B' können die Reaktanden in einem geeigneten Reaktor (z. B. Rundkolben mit Rührer oder in einem Festbettreaktor) gemischt und auf die optimale Arbeitstemperatur des verwendeten Biokatalysators erhitzt werden. Je nach verwendetem Biokatalysator kann diese bei Temperaturen von 20 °C bis 100 °C, bevorzugt von 35 °C bis 80 °C liegen. Bei Verwendung eines Festbettreaktors wird vorzugsweise das Festbett mit dem ausgewählten Enzym befüllt und nach Erreichen der Reaktionstemperatur die Reaktionsmischung durch das Festbett gepumpt. Bei Verzicht auf einen Festbettreaktor kann das Enzym der Reaktionsmischung direkt zugesetzt werden und nach Beendigung der Reaktion durch geeignete Vorrichtungen abfiltriert werden. Zum Erreichen möglichst vollständiger Umsätze kann es vorteilhaft sein, das bei der Reaktion freiwerdende Wasser, bzw. den freiwerdenden niedrigsiedenden Alkohol durch Anlegen eines Vakuums und/oder durch andere geeignete Techniken, beispielsweise Durchleiten inerter Gase (z. B. Stickstoff) oder der Anwendung von Absorptionsmitteln (z. B. Molekularsieb), zu entfernen.

Anschließend können die so erhaltenen Ester, eventuell auch im Gemisch untereinander und/oder mit anderen, terminal ungesättigten organischen Verbindungen, beispielsweise Allyloxyethanol, Glycerinmonoallylether, Allyltrimethylolpropan, α-Olefinen oder endständig ungesättigten Polyethern, vorzugsweise ausschließlich die Ester der Formel B' mit einem linearen, terminale SiH-Gruppen enthaltenden Polydimethylsiloxan A' umgesetzt werden, um die erfindungsgemäßen Polydimethylsiloxan-Polyoxyalkylen-Blockcopolymeren zu erhalten.

Die erfindungsgemäße Umsetzung der Verbindungen A' mit der Verbindung bzw. den Verbindungen B' kann z. B. nach an sich bekanntem Hydrosilylierverfahren durchgeführt werden.

Die Umsetzung der Verbindungen A' mit der Verbindung B' durch Hydrosilylierung zur Herstellung der erfindungsgemäßen Polydimethylsiloxan-Polyoxyalkylen-Blockcopolymeren kann wahlweise mit oder ohne den Einsatz eines geeigneten Lösungsmittels erfolgen. Werden hochmolekulare und damit einhergehend hochviskose SiC-verknüpfte Copolymere angestrebt, so kann es zur Verbesserung der Handhabbarkeit vorteilhaft sein, die Umsetzung in einem geeigneten Lösungsmittel durchzuführen. Geeignete Lösungsmittel sind z. B. Alkane, Cycloalkane, Alkylaromaten u.ä., wobei insbesondere hochsiedende Lösungsmittel mit Siedepunkten > 120°C bevorzugt sind.

Die Reaktionspartner, bestehend aus mindestens einer ungesättigten Polyetherkomponenten B' und mindestens zwei unterschiedlichen α,ω-Wasserstoffsiloxanen, eventuell unter Einbeziehung eines Lösungsmittels, können prinzipiell unter inniger Durchmischung bei erhöhter Temperatur gemeinsam vorgelegt und durch Zugabe einer ausreichenden Menge eines für diese Reaktion praxisüblichen Edelmetallkatalysators, vorzugsweise ausgewählt aus der Gruppe der Platin-Katalysatoren, zur Umsetzung gebracht werden oder aber auch sequentiell der Reaktion zugeführt werden. Hierbei ist insbesondere eine Fahrweise bevorzugt, bei der mindestens eine der Komponenten B' in einem hochsiedenden Solvens bei erhöhter Temperatur zunächst mit einer kleinen Menge des verwendeten Katalysators im Reaktor vorgelegt wird und diese Mischung anschließend unter guter Durchmischung dosierkontrolliert mit den α,ω-Wasserstoffsiloxanen A' beaufschlagt wird.

Das molare Verhältnis von α,ω-Wasserstoffsiloxanen A (insbesondere A^{1'} + A^{2'}) zu ungesättigten Polyetherkomponenten B' beträgt bei der Umsetzung im erfindungsgemäßen Verfahren vorzugsweise von 0,9 : 1 bis 1,1 : 1, vorzugsweise etwa 1 : 1.

Als Edelmetallkatalysatoren können vorzugsweise die aus EP-A-1 520 870 bekannten Ethylen-aktivierten Karstedt-Katalysatoren eingesetzt werden. Die Edelmetallkatalysatoren werden vorzugsweise in Mengen von ca. 1·10⁻⁴ bis ca. 1·10⁻², vorzugsweise 3·10⁻⁴ bis 5·10⁻³ Gew.-%, bezogen auf die Summe der vorgelegten Wasserstoffsiloxane A' und Polyether B', eingesetzt.

Die Reaktionstemperatur bei der Umsetzung der Komponenten A' und B' zur Herstellung der erfindungsgemäßen Copolymeren sollte vorzugsweise von 60 °C bis 140 °C, bevorzugt von 80 °C bis 120 °C betragen.

Die erfindungsgemäßen SiC-verknüpften, linearen Polydimethylsiloxan-Polyoxyalkylen-Blockcopolymeren können als Additive, insbesondere als grenzflächenaktive Additive, besondes bevorzugt als Stabilisatoren zur Herstellung von Polyurethanweichschäumen, insbesondere elastischen Polyurethanweichschäumen und besonders bevorzugt Polyurethan-Etherschäumen verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Herstellungsbeispiel für die Ausgangssubstanz:
Enzymatische Umsetzung eines Polyetherdiols mit 10-Undecensäure (in Anlehnung an DE-10 2006 005 100.9)

In einem 4-1-Mehrhalskolben wurden 1.829,9 g (0,7 mol) eines α,ω-Dihydroxypoly(ethylenoxid-propylenoxid)-Copolymers mit einer Hydroxylzahl von 41,5 (mg KOH)/g mit 50 Massen-% Propylenoxidgehalt und Ethylenoxidendblöcken mit 249,4 g (1,4 mol) Undecensäure (Molmasse: 184,3 g/ mol, Säurezahl: 304,4 mg KOH/g) unter Rühren auf 70 °C erhitzt und dann mit 41,6 g Novozym^{®} 435 (2 Massen-% bezogen auf den Gesamtansatz) versetzt. Bei 4 mbar und unter weiterem ständigen Rühren sowie unter Einleitung eines schwachen Stickstoffstroms (∼2.000 ml/h) wurde die Reaktionsmischung für 23 Stunden zur Umsetzung gebracht. Hierbei sank die Anfangssäurezahl der Reaktionsmischung von ursprünglich 35,8 mg KOH/g Substanz auf 1,4 mg KOH/g Substanz. Nach Filtration und 2 stündiger Wärmebehandlung bei 120 °C war das α,ω-Bis-undecenoato-poly(ethylenoxid-propylenoxid)-Copolymer für die Nachfolgereaktionen einsetzbar.

### Beispiele 1 bis 13:

Die Herstellung aller in der nachfolgenden Tabelle 2 aufgeführten linearen Siliconpolyether-Copolymeren erfolgt via Hydrosilylierung und die nachstehend im Detail beschriebenen Ausführungsbeispiele 4, 6, 7, 11, 12, 13 stehen stellvertretend für die experimentelle Vorgehensweise, die auch bei den Versuchen 1 bis 3, 5 und 8 bis 10 praktiziert wurde.

### Beispiel 4 (nicht erfindungsgemäß):

In einem 500 ml Vierhalskolben mit KPG-Rührer, Kontaktthermometer und Rückflusskühler wurden 40 mmol des oben enzymatisch hergestellten α,ω-Bis-undecenoato-poly(ethylenoxid-propylenoxid)-Copolymers mit 40 mmol eines α,ω-Dihydrogenpolydimethylsiloxans der mittleren Kettenlänge N = 22,5 als 50 Massen-%ige Mischung in einem linearen Alkylbenzol (Hyblene 113, Firma Sasol) bei 90 °C unter inniger Durchmischung vorgelegt und dann mit 5 Massen-ppm Pt bezogen auf den Gesamtansatz eines WK-Katalysators (d.h., eines Ethylen-aktivierten Karstedt-Katalysators gemäß EP-1 520 870) versetzt. Nach 6 Stunden war der gasvolumetrisch bestimmte SiH-Umsatz quantitativ.

Die Verwendung des so hergestellten Copolymers nach 14 tägiger Lagerung bei 70 °C als Stabilisator bei der Herstellung eines Polyurethanweichschaums führte zu einem Schrumpf.

### Beispiel 6 (nicht erfindungsgemäß):

In einem 500 ml Vierhalskolben mit KPG-Rührer, Kontaktthermometer und Rückflusskühler wurden 40 mmol des oben enzymatisch veresterten Polyetherdiols (α,ω-Bis-undecenoato-poly(ethylenoxid-propylenoxid)-Copolymer) mit 10 mmol eines α,ω-Dihydrogenpolydimethylsiloxans der mittleren Kettenlänge N = 15 sowie mit 30 mmol eines α,ω-Dihydrogenpolydimethylsiloxans der mittleren Kettenlänge N = 20 als 50 Massen-%ige Mischung in einem linearen Alkylbenzol (Hyblene 113, Firma Sasol) unter gutem Rühren vorgelegt, auf 90 °C erwärmt und dann mit 5 Massen-ppm Pt bezogen auf den Gesamtansatz eines WK-Katalysators (d.h., eines Ethylen-aktivierten Karstedt-Katalysators gemäß EP-1 520 870) versetzt. Die mittlere Kettenlänge der hier verwendeten Wasserstoffsiloxane betrug N = 18,75. Nach 5 Stunden Reaktionszeit erreichte der gasvolumetrisch bestimmte SiH-Umsatz 99,0 % (Zersetzung einer aliquoten Probe mit Butylatlösung an einer Gasbürette).

Die anwendungstechnische Verschäumung lieferte bei Einsatz des über 14 Tage bei 70 °C gelagerten Copolymers als PU-Weichschaumstabilisator den Befund eines deutlichen Schrumpfs.

### Beispiel 7 (nicht erfindungsgemäß):

In Analogie zu Beispiel 4 wurden 40 mmol des oben enzymatisch veresterten Polyetherdiols (α,ω-Bis-undecenoato-poly(ethylenoxid-propylenoxid)-Copolymer) mit 20 mmol eines α,ω-Dihydrogenpolydimethylsiloxans der mittleren Kettenlänge N = 15 sowie mit 20 mmol eines α,ω-Wasserstoffsiloxans der mittleren Kettenlänge N = 30 als 50 Massen-%ige Mischung in einem linearen Alkylbenzol (Hyblene 113, Firma Sasol) unter guter Durchmischung vorgelegt, auf 90 °C erwärmt und dann mit 5 Massen-ppm Pt bezogen auf den Gesamtansatz eines WK-Katalysators (d.h. eines Ethylen-aktivierten Karstedt-Katalysators gemäß EP-A-1 520 870) versetzt. Die errechnete Kettenlänge der hier eingesetzten Mischung von Wasserstoffsiloxanen betrug N = 22,5. Nach 4 Stunden waren gemäß gasvolumetrischer Analyse über 99,1 % der SiH-Gruppen abreagiert.

Die anwendungstechnische Verschäumung lieferte bei Einsatz des über 14 Tage bei 70 °C gelagerten Copolymers als PU-Weichschaumstabilisator den Befund eines deutlichen Schrumpfs.

### Beispiel 11 (erfindungsgemäß):

In Analogie zu Beispiel 4 wurden 36 mmol des oben enzymatisch veresterten Polyetherdiols (α,ω-Bis-undecenoato-poly(ethylenoxid-propylenoxid)-Copolymer) mit 12 mmol eines α,ω-Dihydrogenpolydimethylsiloxans der mittleren Kettenlänge N = 15 sowie mit 24 mmol eines α,ω-Wasserstoffsiloxans der mittleren Kettenlänge N = 30 als 50 Massen-%ige Mischung in einem linearen Alkylbenzol (Hyblene 113, Firma Sasol) unter guter Durchmischung vorgelegt, auf 90 °C erwärmt und dann mit 5 Massen-ppm Pt bezogen auf den Gesamtansatz eines WK-Katalysators (d.h. eines Ethylen-aktivierten Karstedt-Katalysators gemäß EP-A-1 520 870) versetzt. Die errechnete mittlere Kettenlänge der hier eingesetzten Mischung von Wasserstoffsiloxanen betrug N = 25. Nach 4 Stunden war der gasvolumetrisch bestimmte SiH-Umsatz quantitativ.

Die anwendungstechnische Verschäumung lieferte bei Einsatz des über 14 Tage bei 70 °C gelagerten Copolymers als PU-Weichschaumstabilisator einen schönen, zellgeöffneten Schaum.

### Beispiel 12 (erfindungsgemäß):

In Analogie zu Beispiel 4 wurden 36 mmol des oben enzymatisch veresterten Polyetherdiols (α,ω-Bis-undecenoato-poly(ethylenoxid-propylenoxid)-Copolymer) mit 9 mmol eines α,ω-Dihydrogenpolydimethylsiloxans der mittleren Kettenlänge N = 15 sowie mit 27 mmol eines α,ω-Wasserstoffsiloxans der mittleren Kettenlänge N = 30 als 50 Massen-%ige Mischung in einem linearen Alkylbenzol (Hyblene 113, Firma Sasol) unter guter Durchmischung vorgelegt, auf 90 °C erwärmt und dann mit 5 Massen-ppm Pt bezogen auf den Gesamtansatz eines WK-Katalysators (d.h. eines Ethylen-aktivierten Karstedt-Katalysators gemäß EP-A-1 520 870) versetzt.

Die errechnete mittlere Kettenlänge der hier eingesetzten Mischung von Wasserstoffsiloxanen betrug N = 26,25. Nach 3 Stunden war der gasvolumetrisch bestimmte SiH-Umsatz quantitativ.

Die anwendungstechnische Verschäumung lieferte bei Einsatz des über 14 Tage bei 70°C gelagerten Copolymers als PU-Weichschaumstabilisator einen schönen, zellgeöffneten Schaum.

### Beispiel 13 (nicht erfindungsgemäß):

Analog Beispiel 4 wurden 40 mmol des oben enzymatisch veresterten Polyetherdiols (α,ω-Bis-undecenoato-poly(ethylenoxid-propylenoxid)-Copolymer) mit 10 mmol eines α,ω-Dihydrogenpolydimethylsiloxans der mittleren Kettenlänge N = 20 sowie 30 mmol eines α,ω-Dihydrogenpolydimethylsiloxans der mittleren Kettenlänge N = 30 als 50 Massen-%ige Mischung in einem linearen Alkylbenzol (Hyblene 113, Firma Sasol) unter gutem Rühren vorgelegt, auf 90 °C Reaktionstemperatur erhitzt und dann mit 5 Massen-ppm Pt bezogen auf den Gesamtansatz eines WK-Katalysators (d.h. eines Ethylen-aktivierten Karstedt-Katalysators gemäß EP-1 520 870) versetzt. Die mittlere Kettenlänge der hier verwendeten Mischung aus α,ω-Dihydrogenpolydimethylsiloxanen betrug N = 27,5.

Nach 6 Stunden war der gasvolumetrisch bestimmte SiH-Umsatz quantitativ.

Die anwendungstechnische Verschäumung zeigte bei Einsatz des über 14 Tage bei 70 °C gelagerten Copolymers als PU-Weichschaumstabilisator den Befund eines Schaumkollaps.

### Anwendungsbeispiele:

Ausprüfung der gewonnenen Polydimethylsiloxan-Polyoxyalkylen-Blockcopolymeren als Schaumstabilisator

Die Verschäumung aller in den Beispielen hergestellten Polyethersiloxane erfolgte nach deren 14-tägiger Lagerung bei 70 °C. Diese Bedingungen tragen der Praxisrelevanz in der Polyurethanindustrie Rechnung, dergestalt, dass die Transportbedingungen globaler Belieferungen solche Lagerzeiten und -temperaturen beinhalten können.

Der anwendungstechnische Test bediente sich einer typischen Formulierung eines Etherschaums, die sich wie in Tabelle 1 dargestellt zusammensetzte:

**Tabelle 1**

| Zusammensetzung der Etherschaumformulierung: | |
|---|---|
| Gew.-Teile | Rezepturbestandteile |
| 0,07 | Kosmos^{®} 29 (Zinn(II)-2-ethylhexanoat) der Firma Goldschmidt GmbH |
| 30 | Polyol CP 3322 (marktübliches Polyol der Firma DOW) |
| 70 | Polyol CP 755 (marktübliches Polyol der Firma DOW) |
| 7 | Polyol CP 1421 (marktübliches Polyol der Firma DOW) |
| 1,95 | Wasser |
| 0,2 | Tegoamin^{®} BDE (Bis(dimethylaminoethyl)etherlösung) der Firma Goldschmidt GmbH |
| 0,3 | Tegoamin^{®} 33(Triethylendiaminlösung) |
| 0,2 | Tegoamin^{®} DMEA (Dimethylethanolaminlösung) |
| 1,2 | des zu testenden Schaumstabilisators |
| 40,3 | Toluylendiisocyanat (TDI 80) (entsprechend einem Index von 85) |

In einem Pappbecher wurden der Zinnkatalysator Zinn(II)-2-ethylhexanoat, die drei Polyole, das Wasser und die drei Aminkatalysatoren vorgelegt und für 60 s mit einem Scheibenrührer bei 1.000 U/min vermischt. Anschließend wurde das Isocyanat zugegeben und mit dem gleichen Rührer für 7 s bei 1.500 U/min eingearbeitet. Dabei begann die Mischung im Becher aufzuschäumen. Deshalb wurde sie direkt nach dem Ende des Rührens in eine Verschäumungsbox gegossen. Diese hat eine Grundfläche von 17 x 17 cm und eine Höhe von 30 cm. Nach außen verhinderte eine 5 cm dicke Isolierung aus PU-Schaum ein zu schnelles Abkühlen. Innen war die Box mit einer Kunststofffolie ausgelegt, um den ausgehärteten Schaum anschließend entnehmen zu können. Der Schaum stieg nach dem Eingießen in der Verschäumungsbox auf. Im Idealfall blies der Schaum bei Erreichen der maximalen Steighöhe ab und sackt dann leicht zurück. Dabei öffnet sich die Zellmembrane der Schaumbläschen und eine offenporige Zellstruktur des Schaumstoffs wurde erhalten. Bei einer zu geringen Stabilisierungswirkung kollabierte der PU-Schaum vor Erreichen der maximalen Steighöhe. Im Falle einer zu starken Stabilisierung stieg der Schaum sehr lange und blies nicht ab. Bedingt durch die dann sehr geschlossene Zellstruktur schrumpfte der Schaum beim anschließenden Abkühlen durch die Volumenkontraktion des sich abkühlenden Gases. Die Ergebnisse der Verschäumung für die verschiedenen Formulierungen sind in Tabelle 2 wiedergegeben.

**Tabelle 2**

| Ergebnisse der Verschäumungen der Reaktionsprodukte der vorabbeschriebenen Anwendungsbeispiele: | | | | |
|---|---|---|---|---|
| Versuchsnummer | α,ω-Wasserstoffsiloxan | | Ketten länge^{a} | Verschäumung nach 14-tägiger Lagerung bei 70 °C |
| | Eingesetzte Kettenlängen | Molverhältnis | | |
| 1 | N = 15 | | 15 | Schrumpf |
| 2 | N = 30 | | 30 | Kollaps |
| 3 | N = 20 | | 20 | Schrumpf |
| 4 | N = 22,5 | | 22,5 | Schrumpf |
| 5 | N = 25 | | 25 | Schrumpf |
| 6 | N = 15/ N = 20 | 1/3 | 18,75^{a} | Schrumpf |
| 7 | N = 15/ N = 30 | 1/1 | 22,5^{a} | Schrumpf |
| 8 | N = 20/ N = 30 | 3/1 | 22,5^{a} | Schrumpf |
| 9 | N = 20/ N = 30 | 2/1 | 23,3^{a} | offen |
| 10 | N = 20/ N = 30 | 1/1 | 25^{a} | offen |
| 11 | N = 15/ N = 30 | 1/2 | 25^{a} | offen |
| 12 | N = 15/ N = 30 | 1/3 | 26,25^{a} | offen |
| 13 | N = 20/ N = 30 | 1/3 | 27,5^{a} | Kollaps |

| | | | | |
|---|---|---|---|---|
| ^{a}Mittlere Siloxanmischkettenlängen | | | | |

### Beobachtung bei Beispielen 1 und 3 bis 8 (nicht erfindungsgemäß):

Der Schaum stieg auf und blies nicht ab. Stattdessen stieg der Schaum lange nach (> 3 min). Beim nachfolgenden Abkühlen schrumpfte der Schaum stark. Eine Messung der physikalischen Eigenschaften konnte aufgrund des Schrumpfs nicht erfolgen. Der Schaumstabilisator dieses Beispiels war für die Herstellung eines Etherschaumstoffs ungeeignet.

### Beobachtung bei Beispielen 2 und 13 (nicht erfindungsgemäß):

Der Schaum stieg sehr unruhig auf und brach deutlich vor Erreichen der bei guter Stabilisierung zu erwartenden maximalen Steighöhe in sich zusammen (Kollaps).

### Beobachtung bei Beispielen 9 bis 12 (erfindungsgemäß):

Der Schaum stieg auf, blies nach ca. 2 min ab, sackte leicht zurück und verändert sich beim nachfolgenden Abkühlen nicht weiter. Bei der nachfolgenden Untersuchung wurden eine Zellzahl von 10 Zellen/cm und eine Porosität von 70 mm gemessen (Staudruckmessung, ermittelt wurde die Höhe einer Wassersäule, die einen äquivalenten Druck erzeugt). Dies veranschaulicht eine ausreichend feine und offene Zellstruktur (von geschlossenen Schäumen spricht man ab etwa 300 mm Wassersäule). Der Schaum wies die gewünschten Etherschaum-Eigenschaften auf. Der Schaumstabilisator der erfindungsgemäßen Beispiele ist daher für die Herstellung dieses Schaumtyps geeignet.

## Patentansprüche

1. Lineare Si-C-Gruppen und Carbonsäureestergruppen aufweisende Polydimethylsiloxan-Polyoxyalkylen-Blockcopolymere mit sich wiederholenden (A¹BA²B)-Einheiten
mit A¹ und A² gleich zwei verschiedenen Polydimethylsiloxaneinheiten der allgemeinen Formel (I) 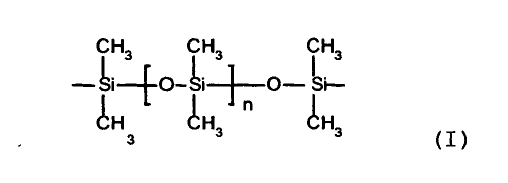 mit einer Anzahl an Si-Atomen N = (n + 2) von 15 ≤ N < 30 und N_{A1} ≠ N_{A2}
und B gleich eine Einheit der Formel (II)
-CH₂-CH₂-(CH₂)ₐ-CO[O-CH₂-CH(R)]_{c}-O-[D-O]ₑ-[-CH(R)-CH₂-O]_{d}-OC-(CH₂)_{b}-CH₂-CH₂- (II)
mit
R unabhängig voneinander H, -CH₃, -C₂H₅,
a, b unabhängig voneinander 0 bis 20,
c, d unabhängig voneinander Werte ≥ 1,
e 0 oder 1,
D ein Kohlenwasserstoffrest mit 2 bis 10 C-Atomen,
wobei das Gesamtmolgewicht der Einheit der Formel II von 600 bis 10.000 g/mol beträgt,
mit der Maßgabe, dass das mittlere Mischmolgewicht der Polydimethylsiloxaneinheiten (A¹+A²) von > 1.665 bis < 1.998 g/mol beträgt und der Anteil an [O-CH₂-CH(R)] mit R = H > 0 und ≤ 50 Gew.-% bezogen auf das Gesamtgewicht [O-CH₂-CH(R)] in B beträgt.

2. Polydimethylsiloxan-Polyoxyalkylen-Blockcopolymere gemäß Anspruch 1, **dadurch gekennzeichnet, dass** ausschließlich Einheiten A¹ mit N ≤ 20 und A² mit N ≥ 25 enthalten sind.

3. Polydimethylsiloxan-Polyoxyalkylen-Blockcopolymere gemäß den Ansprüchen 1 oder 2, **dadurch gekennzeichnet, dass** die Einheit der Formel II eine mittlere Molmasse von 2.000 bis 5.000 g/ mol aufweist.

4. Polydimethylsiloxan-Polyoxyalkylen-Blockcopolymere gemäß mindestens einem der Ansprüche 1 bis 3, **dadurch gekennzeichnet, dass** die Einheit der Formel (II) einen Anteil an [O-CH₂-CH(R)] mit R = H von 30 bis ≤ 50 Gew.-% bezogen auf das Gesamtgewicht an [O-CH₂-CH(R)] in B aufweist.

5. Polydimethylsiloxan-Polyoxyalkylen-Blockcopolymere gemäß mindestens einem der Ansprüche 1 bis 4, **dadurch gekennzeichnet, dass** das Polydimethylsiloxan-Polyoxyalkylen-Blockcopolymer ein mittleres zahlengemitteltes Molekulargewicht Mₙ von mindestens 10.000 g/mol bis ca. 100.000 g/mol aufweist.

6. Polydimethylsiloxan-Polyoxyalkylen-Blockcopolymere gemäß mindestens einem der Ansprüche 1 bis 5, **dadurch gekennzeichnet, dass** sie durch ein Verfahren gemäß einem der Ansprüche 7 bis 10 erhalten werden.

7. Verfahren zur Herstellung von SiC-verknüpften, linearen Polydimethylsiloxan-Polyoxyalkylen-Blockcopolymeren mit sich wiederholenden (A¹BA²B)-Einheiten durch Umsetzung von mindestens zwei unterschiedlichen linearen α,ω-Dihydrogen-polydimethylsiloxanen A' mit mindestens einem ungesättigten, Estergruppen enthaltenden Polyetherdiol (B') in Gegenwart einer oder mehrerer Edelmetallverbindungen als Katalysator, mit
A' mindestens zwei verschiedenen α,ω-Dihydrogen-Poly- dimethylsiloxanverbindungen (A^{1'} und A^{2'}) der allge- meinen Formel (I') 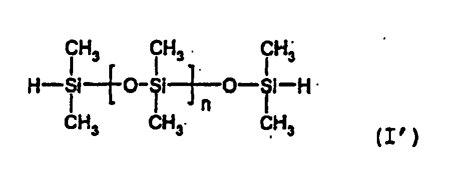 mit einer Anzahl an Si-Atomen N = (n + 2) von 15 ≤ N ≤ 30 und N_{A1} ≠ N_{A2}
B'
CH₂=CH-(CH₂)ₐ-CO[O-CH₂-CH(R)]_{c}-O-[D-O]ₑ-[-CH(R)-CH₂-O]_{c}-OC-(CH₂)_{b}-CH=CH₂ (II')
mit
R unabhängig voneinander H, -CH₃, -C₂H₅,
a, b unabhängig voneinander 0 bis 20,
e 0 oder 1,
c, d nabhängig voneinander Werte ≥ 1 und
D ein Kohlenwasserstoffrest mit 2 bis 10 C-Atomen,
wobei das Gesamtmolgewicht des Polyethers B' von 600 bis 10.000 g/mol beträgt,
mit den Maßgaben, dass das mittlere Mischmolgewicht der Polydimethylsiloxanverbindungen (A^{1'}+A^{2'}) von > 1.665 bis < 1.998 g/mol beträgt und der Anteil an [O-CH₂-CH(R)] mit R = H > 0 und ≤ 50 Gew.-%, bezogen auf Gesamtpolyethergewicht [O-CH₂-CH(R)] in B', beträgt.

8. Verfahren gemäß Anspruch 7, **dadurch gekennzeichnet, dass** ausschließlich Verbindungen A^{1'} mit N ≤ 20 und A^{2'} mit N ≥ 25 als Verbindungen der Formel (I') eingesetzt werden.

9. Verfahren gemäß Anspruch 7 oder 8, **dadurch gekennzeichnet, dass** als Komponente B' eine Verbindung der Formel (II') eingesetzt wird, die eine mittlere Molmasse von 2.000 bis 5.000 g/ mol aufweist.

10. Verfahren gemäß zumindest einem der Ansprüche 7 bis 9, **dadurch gekennzeichnet, dass** eine Verbindung der Formel (II') eingesetzt wird, die einen Anteil an [O-CH₂-CH(R)] mit R = H von 30 bis ≤ 50 Gew.-% bezogen auf das Gesamtgewicht an [O-CH₂-CH(R)] in B' aufweist.

11. Verwendung der SiC-verknüpften, linearen Polydimethylsiloxan-Polyoxyalkylen-Blockcopolymeren gemäß mindestens einem der Ansprüche 1 bis 6 als Stabilisatoren zur Herstellung von Polyurethanschäumen.

12. Verwendung der SiC-verknüpften, linearen Polydimethylsiloxan-Polyoxyalkylen-Blockcopolymeren gemäß mindestens einem der Ansprüche 1 bis 6 als Stabilisator zur Herstellung von Polyurethan-Etherschäumen.

## Claims

1. Linear polydimethylsiloxane-polyoxyalkylene block copolymers containing Si-C groups and carboxylic ester groups and having repeating (A¹BA²B) units where A¹ and A² are two different polydimethylsiloxane units of the general formula (I) 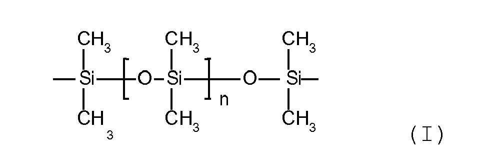 with a number of Si atoms N = (n + 2) of 15 ≤ N ≤ 30 and N_{A1} ≠ N_{A2}
and B is a unit of the formula (II)
-CH₂-CH₂-(CH₂)ₐ-CO[O-CH₂-CH(R)]_{c}-O-[D-O]ₑ-[-CH(R)-CH₂-O]_{d}-OC-(CH₂)_{b}-CH₂-CH₂- (II)
where
R independently at each occurrence is H, -CH₃ or -C₂H₅,
a and b independently of one another are 0 to 20,
c and d independently of one another are values ≥ 1,
e is 0 or 1,
D is a hydrocarbon radical having 2 to 10 C atoms,
the overall molar weight of the unit of the formula II being from 600 to 10 000 g/mol,
with the proviso that the average mixed molar weight of the polydimethylsiloxane units (A¹+A²) is from > 1665 to < 1998 g/mol and the fraction of [O-CH₂-CH(R)] with R = H is > 0% to ≤ 50% by weight, based on the overall weight of [O-CH₂-CH(R)] in B.

2. Polydimethylsiloxane-polyoxyalkylene block copolymers according to Claim 1, **characterized in that** exclusively units A¹ with N ≤ 20 and A² with N ≥ 25 are present.

3. Polydimethylsiloxane-polyoxyalkylene block copolymers according to Claim 1 or 2, **characterized in that** the unit of the formula II has an average molar mass of 2000 to 5000 g/mol.

4. Polydimethylsiloxane-polyoxyalkylene block copolymers according to at least one of Claims 1 to 3, **characterized in that** the unit of the formula (II) has a fraction of [O-CH₂-CH(R)] with R = H of 30% to ≤ 50% by weight, based on the overall weight of [O-CH₂-CH(R)] in B.

5. Polydimethylsiloxane-polyoxyalkylene block copolymers according to at least one of Claims 1 to 4, **characterized in that** the polydimethylsiloxane-polyoxyalkylene block copolymer has an average number-averaged molecular weight Mₙ of at least 10 000 g/mol to approximately 100 000 g/mol.

6. Polydimethylsiloxane-polyoxyalkylene block copolymers according to at least one of Claims 1 to 5, **characterized in that** they are obtained by a process according to any one of Claims 7 to 10.

7. Process for preparing SiC-linked, linear polydimethylsiloxane-polyoxyalkylene block copolymers having repeating (A¹BA²B) units by reacting at least two different linear α,ω-dihydropoly-dimethylsiloxanes A' with at least one unsaturated polyetherdiol (B') containing ester groups, in the presence of one or more noble metal compounds as catalyst, where
A' is at least two different α,ω-dihydropolydimethylsiloxane compounds (A^{1'} and A^{2'}) of the general formula (I') 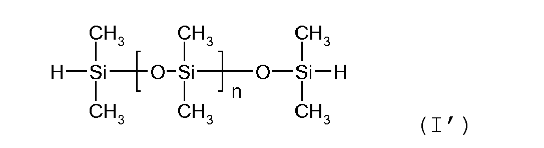 with a number of Si atoms N = (n + 2) of 15 ≤ N ≤ 30 and N_{A1} ≠ N_{A2},
B' is
CH₂=CH-(CH₂)ₐ-CO[O-CH₂-CH(R)]_{c}-O-[D-O]ₑ-[-CH(R)-CH₂-O]_{d}-OC-(CH₂)_{b}-CH=CH₂ (II')
where
R a and b at each occurrence is H, -CH₃ or -C₂H₅, independently of one another are 0 to 20,
e is 0 or 1,
c and d independently of one another are values ≥ 1 and
D is a hydrocarbon radical having 2 to 10 C atoms,
the overall molar weight of the polyether B' being from 600 to 10 000 g/mol,
with the provisos that the average mixed molar weight of the polydimethylsiloxane compounds (A^{1'}+A^{2'}) is from > 1665 to < 1998 g/mol and that the fraction of [O-CH₂-CH(R)] with R = H is > 0% to ≤ 50% by weight, based on the overall polyether weight of [O-CH₂-CH(R)] in B'.

8. Process according to Claim 7, **characterized in that** exclusively compounds A^{1'} with N ≤ 20 and A^{2'} with N ≥ 25 are used as compounds of the formula (I').

9. Process according to Claim 7 or 8, **characterized in that** as component B' a compound of the formula (II') is used which has an average molar mass of 2000 to 5000 g/mol.

10. Process according to at least one of Claims 7 to 9, **characterized in that** a compound of the formula (II') is used which has a fraction of [O-CH₂-CH(R)] with R = H of 30% to ≤ 50% by weight, based on the overall weight of [O-CH₂-CH(R)] in B'.

11. Use of the SiC-linked, linear polydimethylsiloxane-polyoxyalkylene block copolymers according to at least one of Claims 1 to 6 as stabilizers for producing polyurethane foams.

12. Use of the SiC-linked, linear polydimethylsiloxane-polyoxyalkylene block copolymers according to at least one of Claims 1 to 6 as a stabilizer for producing polyurethane ether foams.

## Revendications

1. Copolymères séquencés polydiméthylsiloxane-polyoxyalkylène linéaires comportant des groupes Si-C et des groupes ester d'acide carboxylique, à motifs (A¹BA²B) répétitifs
où A¹ et A² représentent deux motifs polydiméthylsiloxane différents de formule générale (I) 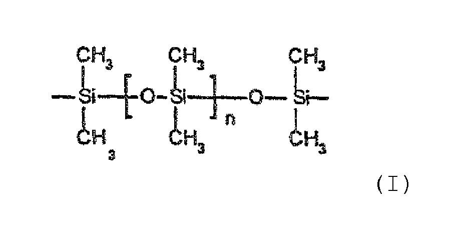 ayant un nombre d'atomes de silicium N = (n + 2) de 15 ≤ N ≤ 30 et N_{A1} ≤ N_{A2}
et B représente un motif de formule (II)
-CH₂-CH₂-(CH₂)ₐ-CO[O-CH₂-CH(R)]_{c}-O-[D-O]ₑ-[-CH(R)-CH₂-O]_{d}-OC-[CH₂]_{b}-CH₂-CH₂- (II)
où
R représentent chacun indépendamment H, -CH₃, -C₂H₅,
a, b valent, indépendamment l'un de l'autre, de 0 à 20,
c, d ont, indépendamment l'un de l'autre, des valeurs ≥ 1,
e vaut 0 ou 1,
D représente un radical hydrocarboné ayant de 2 à 10 atomes de carbone,
la masse moléculaire totale de l'unité de formule II allant de 600 à 10 000 g/mole,
étant entendu que la masse moléculaire mixte moyenne des motifs polydiméthylsiloxane (A¹+A²) va de > 1 665 à < 1 998 g/mole et la proportion de [O-CH₂-CH(R)] où R = H est > 0 et ≤ 50 % en poids, par rapport au poids total de [O-CH₂-CH(R)] dans B.

2. Copolymères séquencés polydiméthylsiloxane-polyoxyalkylène selon la revendication 1, **caractérisés en ce que** sont contenus exclusivement des motifs A¹ où N est ≤ 20 et A² où N est ≥ 25.

3. Copolymères séquencés polydiméthylsiloxane-polyoxyalkylène selon la revendication 1 ou 2, **caractérisés en ce que** le motif de formule II présente une masse moléculaire moyenne de 2 000 à 5 000 g/mole.

4. Copolymères séquencés polydiméthylsiloxane-polyoxyalkylène selon au moins l'une des revendications 1 à 3, **caractérisés en ce que** le motif de formule (II) présente une proportion de [O-CH₂-CH(R)] où R = H qui va de 30 à ≤ 50 % en poids, par rapport au poids total de [O-CH₂-CH(R)] dans B.

5. Copolymères séquencés polydiméthylsiloxane-polyoxyalkylène selon au moins l'une des revendications 1 à 4, **caractérisés en ce que** le copolymères séquencé polydiméthylsiloxane-polyoxyalkylène présente une masse moléculaire moyenne moyennée en nombre Mₙ d'au moins 10 000 g/mole à environ 100 000 g/mole.

6. Copolymères séquencés polydiméthylsiloxane-polyoxyalkylène selon au moins l'une des revendications 1 à 5, **caractérisés en ce qu'**ils sont obtenus par un procédé selon l'une quelconque des revendications 7 à 10.

7. Procédé pour la préparation de copolymères séquencés polydiméthylsiloxane-polyoxyalkylène linéaires à liaisons SiC, à motifs (A¹BA²B) répétitifs, par mise en réaction d'au moins deux α,ω-dihydrogénopolydiméthylsiloxanes linéaires A' différents avec au moins un polyétherdiol insaturé (B') contenant des groupes ester, en présence d'un ou plusieurs composés à métal noble en tant que catalyseur, avec
A' au moins deux composés α ,ω-dihydrogéno-polydiméthylsiloxane différents (A^{1'} et A^{2'}) de formule générale (I') 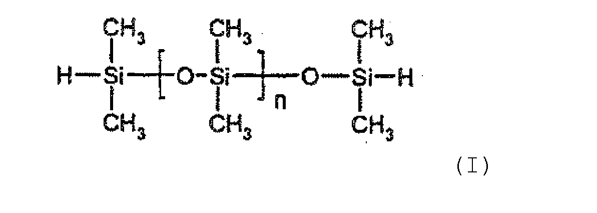 ayant un nombre d'atomes de silicium N = (n + 2) de 15 ≤ N ≤ 30 et N_{A1} ≠ N_{A2}
B'
CH₂=CH-(CH₂)ₐ-CO[O-CH₂-CH(R)_{]c}-O-[D-O]ₑ-[-CH(R)-CH₂-O]_{d}-OC-[CH₂]_{b}-CH=CH₂ (II')
où
R représentent chacun indépendamment H, -CH₃, -C₂H₅,
a, b valent, indépendamment l'un de l'autre, de 0 à 20,
e vaut 0 ou 1,
c, d ont, indépendamment l'un de l'autre, des valeurs et ≥ 1
D représente un radical hydrocarboné ayant de 2 à 10 atomes de carbone,
la masse moléculaire totale du polyéther B' allant de 600 à 10 000 g/mole,
étant entendu que la masse moléculaire mixte moyenne des composés polydiméthylsiloxane (A^{1'}+A^{2'}) va de > 1 665 à < 1 998 g/mole et la proportion de [O-CH₂-CH(R)] où R = H est > 0 et ≤ 50 % en poids, par rapport au poids total des polyéthers [O-CH₂-CH(R)] dans B'.

8. Procédé selon la revendication 7, **caractérisé en ce qu'**on utilise exclusivement comme composés de formule (I') des composés A^{1'} où N ≤ 20 et A^{2'} où N ≥ 25.

9. Procédé selon la revendication 7 ou 8, **caractérisé en ce qu'**on utilise comme composant B' un composé de formule (II'), qui présente une masse moléculaire moyenne de 2 000 à 5 000 g/mole.

10. Procédé selon au moins l'une des revendications 7 à 9, **caractérisé en ce qu'**on utilise un composé de formule (II') qui présente une teneur en [O-CH₂-CH(R)] où R = H de 30 à ≤ 50 % en poids, par rapport au poids total de [O-CH₂-CH(R)] dans B'.

11. Utilisation des copolymères séquencés polydiméthylsiloxane-polyoxyalkylène linéaires à liaisons SiC selon au moins l'une des revendications 1 à 6, comme stabilisants pour la production de mousses de polyuréthanne.

12. Utilisation des copolymères séquencés polydiméthylsiloxane-polyoxyalkylène linéaires à liaisons SiC selon au moins l'une des revendications 1 à 6, comme stabilisants pour la production de mousses d'éther-polyuréthanne.
